Europäisches Patentamt

European Patent Office

Office européen des brevets

(19)

(11) Publication number: **0 425 451 A2**

# (12) EUROPEAN PATENT APPLICATION

(21) Application number: 90830454.6

(22) Date of filing: 12.10.90

(51) Int. Cl.5: **B04B 5/12, A61C 17/14**

(30) Priority: 27.10.89 IT 4016289

(43) Date of publication of application:
02.05.91 Bulletin 91/18

(84) Designated Contracting States:
AT BE CH DE ES FR GB GR LI NL

(71) Applicant: CATTANI S.P.A.
Via G. Natta, 6/A
I-43100 Parma(IT)

(72) Inventor: **Bocchi, Giuseppe**
**Borgo Riccio da Parma, 3**
**I-43100 Parma(IT)**

(74) Representative: Lanzoni, Luciano
c/o BUGNION S.p.A. Viale Trento Trieste, 25
I-41100 Modena(IT)

(54) A centrifugal separator, in particular for use in conjunction with dental equipment.

(57) The invention relates to a centrifugal separator, in particular for use in conjunction with dental equipment.

The separator comprises a container (1) equipped with an inlet (2) and an outlet (3), as well as a collecting zone (4) for the separated impurities: said separator further comprises the impellers of a first pump (5) and a second pump (6); the liquid containing the impurities to be separated is introduced to the container (1) by means of the first pump (5) and exits from the container (1) crossing in centripetal direction the second pump (6) whose intake inlet (6a) is connected to the outlet (3) of the container (1); the liquid exits form the container (1) since the discharge head of the first pump (5) is superior to that of the second pump (6), while the impurities are centrifuged towards the internal walls of the container (1) and are collected on the bottom of the container (1) in the collecting zone (4).

EP 0 425 451 A2

The invention concerns a centrifugal separator, in particular for use in conjunction with dental equipment.

The high potential polluting power of substances such as amalgam, heavy metals and so on, used in dental operations, is well known. Thus there is a particular awareness of the need to separate such substances from the liquids which are discharged into the sewers; also because the laws regarding such discharges are becoming progressively more restrictive in many countries.

The prior art embraces filtering and decanting systems for the separation of these substances; the former have the notable defect of causing filter blocking, especially if substances of small dimensions, requiring very fine sieve filters, are to be separated, while the latter do not offer a sufficient degree of certainty as regards the separation itself.

The prior art also embraces centrifugal systems which, introducing the liquid containing the substances to be separated into a separating chamber through a centrifugal pump, throw the substances to be separated against the walls of the separating chamber so that said substances fall to the bottom of the chamber and therefore do not exit with the liquid, which exits higher up in the separator. This system, however, like the other, does not permit of separating the smallest particles, which remain suspended in the liquid and exit from the separator together with it. To combat this occurrence, various devices have been used subsequent to the centrifugal pump, such as filters or mazes which in some way separate the smallest particles from the liquid, or at least block their exit. These systems too, however, present problems of blocking, with subsequent frequent need to remove and clean said filters or mazes.

Aim of the present invention is to eliminate the above-described inconveniences, by providing a separator which permits of separating very small particles and which at the same time presents no problems of blocking.

Further aim of the present invention is to provide a separator which does not need maintenance.

These aims and others are attained by the separator in question, as described in the claims, which by means of a first pump introduces the liquid with the particles to be separated into a container equipped with an inlet and an outlet, and which further comprises a second, centrifugal-type pump whose aspiration is connected to the outlet of said container, through which outlet the liquid, crossing the pump in centripetal direction, can exit thanks to the fact that the discharge head of the second pump is inferior to that of the first pump. On the bottom of the container a collecting zone is provided, in which the particles, centrifuged by the second pump and therefore unable to exit through the outlet, are collected.

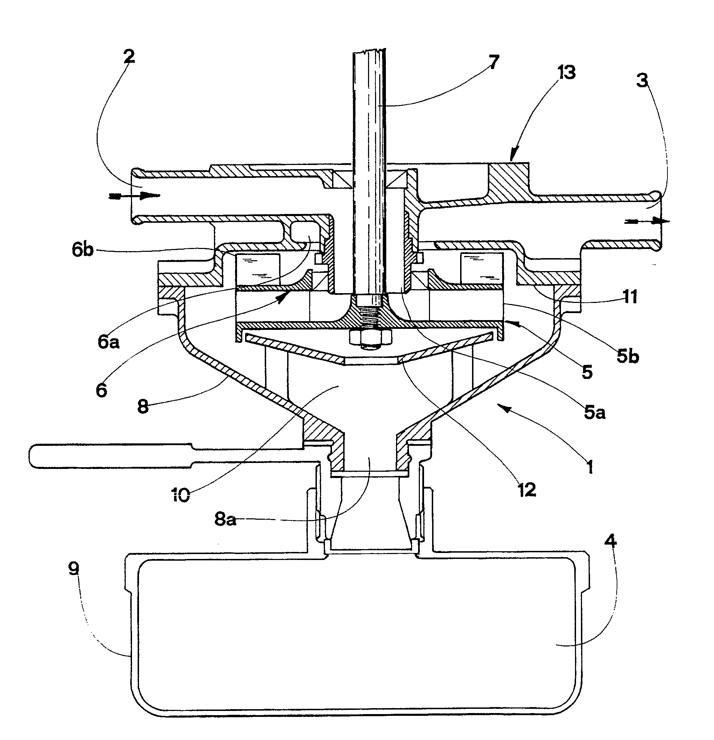

Further characteristics and advantages will appear from the detailed description which follows, of a preferred but not exclusive embodiment of the separator in question, here illustrated purely in the form of a non-limiting example in the accompanying figure which shows a section according to a vertical axial plane.

The separator in question comprises a container 1 equipped with an inlet 2 for the liquid to be purified, and with an outlet 3 for the purified liquid; the container 1 is also equipped with a collecting zone 4 for the collection of the impurities which have been separated from the liquid, situated in the lower part of the container 1. The container 1 comprises a central body 8, convergent in form and having a lower passage 8a to which is connected a collecting tank 9 which acts as a collecting zone 4. The separator also comprises a cover 13 which in turn comprises the inlet 2 and outlet 3, and is connected superior to the central body 8.

The separator also comprises a first centrifugal type pump 5, whose intake inlet 5a is connected to the inlet 2 of the container 1 and whose discharge outlet 5b is in communication with the inside of the container 1. The separator also comprises a second pump 6, also of the centrifugal type, whose intake inlet 6a is connected to the outlet 3 of the container 1 and whose discharge outlet 6b is in communication with the inside of the container 1 itself.

Pumps 5 and 6 are each equipped with their own impeller; the impellers of the two pumps 5 and 6 are coaxial and positioned in such a way that the impeller of pump 6 is situated above the impeller of pump 5, and are solid in rotation by action of a shaft 7 which protrudes from the container 1 through a hole bored in the cover 13. Both impellers are arranged internally to the container 1 in an internal central zone 10 of the container 1 itself which is defined by the cover 13 and by the central body 8 of the container 1. The internal central zone 10 has straight circular sections and presents a sharp diminution in diameter, for reasons that will better appear in the following description, between a first zone containing the impeller of the first pump 5 and a second zone containing the impeller of the second pump 6; thus between the said first and second zones of the internal central zone 10 there is a stopping surface 11 which is on the same plane as the separation plane between the impellers of the two pumps.

The impellers of pumps 5 and 6 have the same external diameter, the same axial height and the same number of blades, and turn at the same speed; this permits of obtaining a higher discharge head for the first pump 5 with respect to the second pump 6 by reducing the internal diameter of the blade group of the first pump 5 through lengthening the blades of said first pump 5 with respect to those of the second pump 6. It is, however, evident that the pumps 5 and 6 could be realised in any other way as long as there is the certainty that the discharge head of the first pump 5 is higher than that of the second pump 6.

A dividing plate 12 is envisaged below the impeller of the second pump 6, whose function is to diminish the turbulence generated in the liquid by the movement of the impellers.

The collecting tank 9 is removably connected to the bottom passage of the central body 8 of the container 1 by means of a bayonet coupling of known type which permits of easy removal of the collecting tank 9 for extraction of the substances separated in the separator.

The functioning of the separator is as follows.

The following description is of an operation in which the entire container 1 is full of liquid.

The first pump 5 draws the liquid from the inlet 2, to which it is connected by its intake inlet 5a, and introduces it, giving it a certain discharge head, into the container 1; in this phase the particles suspended in the liquid are centrifuged towards the walls of the container 1. The larger particles fall by force of gravity towards the bottom of the container 1 and are deposited in the collecting tank 9; this separating action is not however sufficient inasmuch as the smaller particles remain suspended in the liquid and could exit from the separator with said liquid.

A first obstacle to the rising up of the particles together with the liquid towards the outlet 3 of the separator is provided by the stopping surface 11 which impedes the said raising up of the particles.

Some particles could however move up towards the outlet 3. The second pump 6 is arranged so that it can exert an action which opposes the exit of the liquid from the container 1. Since the discharge head of the first pump 5 is superior to that of the second pump 6, the liquid inside the container 1 is forced to exit from the outlet 3, thus crossing the second pump 6 in centripetal direction. The suspended particles, which have a higher density than the liquid, are centrifuged by the second pump 6 towards the outside and their exit is impeded by the action of the second pump 6. The particles to be extracted therefore remain inside the container 1 and fall into its bottom zone where they are collected in the collecting tank 9.

By regulating appropriately the speeds of the impellers particles of very small dimensions can be separated. Good results have been obtained, for example, with impellers having a diameter of about 80-100mm (in the figure the dimension of the other parts are in proportion) and with rotation speeds of about 2,800 r/m. It is however evident that these dimensions can be regulated differently according to the sizes and densities of the particles to be separated, provided that the discharge head of the first pump 5 is always maintained superior to that of the second pump 6.

It would also be possible to use a first pump of a non-centrifugal type, or possibly arranged in a different way to that illustrated in the figure, although the figure and description enlarged upon here permit both of exploiting fully the first centrifugal action and effecting an extremely easy adjustment of the device.

In the figure and description the blades of the impellers are straight, as they must primarily have a selective separation function; an inclination of the blades would not be advantageous since the pumping function occurs in extremely variable loading conditions which are not quantifiable for the purpose of optimization of the hydraulic performance of the impellers.

## Claims

1) A centrifugal separator, in particular for use in conjunction with dental equipment, comprising a container (1) having a inlet (2) for the liquid to be purified in which are immersed the impurities to be separated, an outlet (3) for the purified liquid and a collecting zone (4) for the impurities which is situated in the lower part of the container; further comprising a first pump (5) which introduces the liquid to be purified into the container (1); a second pump (6) of the centrifugal type, whose intake inlet (6a) is connected to the outlet (3) of the container (1) and whose discharge outlet (6b) is in communication with the inside of said container (1), which pump gives a lower discharge head to the liquid than that given by the first pump (5).

2) Separator as in claim 1, wherein: said first pump (5) is of the centrifuge type; the intake inlet (5a) of said first pump (5) is connected to the inlet (2) of the container (1) while the discharge outlet (5b) of the first pump (5) is in communication with the inside of the container (1).

3) Separator as in claim 2, wherein: the first pump (5) and the second pump (6) comprise respectively a first and second impeller, which are coaxial and positioned in such a way that the impeller of pump (6) is situated above the impeller of pump (5), and are solid in rotation by action of a shaft (7) which protrudes from the container (1).

4) Separator as in claim 3, wherein said container (1) comprises: a central body (8), convergent in form and having a lower passage (8a) to which a collecting tank (9) is removably connected, and above which central body (8) is connected a cover (13) which in turn comprises the inlet (2) and outlet (3) of the container (1); an internal central zone (10) defined by said cover (13) and said central body (8), in which are housed the impellers of the said first pump (5) and second pump (6) which are arranged in such a way that the the impeller of the second pump (6) is positioned above the impeller of the first pump (5).

5) Separator as in claim 4, wherein said internal central zone (10) has straight circular sections and presents a sharp diminution in diameter between a first zone containing the impeller of the first pump (5) and a second zone containing the impeller of the second pump (6).

6) Separator as in claim 4, comprising a a dividing plate (12) arranged in the central body (8) below the impellers of the pumps (5) and (6).